(19) Europäisches Patentamt
European Patent Office
Office européen des brevets

(11) EP 3 222 651 A1

(12) EUROPÄISCHE PATENTANMELDUNG

(43) Veröffentlichungstag:
**27.09.2017 Patentblatt 2017/39**

(21) Anmeldenummer: **16161430.0**

(22) Anmeldetag: **21.03.2016**

(51) Int Cl.:
***C08G 75/00*** *(2006.01)* ***C08J 3/00*** *(2006.01)*
***C08J 3/14*** *(2006.01)* ***C08F 6/28*** *(2006.01)*
***C08G 65/40*** *(2006.01)* ***C08G 65/46*** *(2006.01)*
***C08G 75/02*** *(2016.01)* ***C08G 75/20*** *(2016.01)*
***C08G 75/23*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **BASF SE**
**67056 Ludwigshafen am Rhein (DE)**

(72) Erfinder:
- **Gramlich, Simon**
  **69493 Hirschberg (DE)**
- **Stammer, Achim**
  **67251 Freinsheim (DE)**
- **Ulzhoefer, Angela**
  **67065 Ludwigshafen (DE)**
- **Niedermaier, Frank**
  **68526 Ladenburg (DE)**
- **Gassmann, Michel**
  **76872 Winden (DE)**

(74) Vertreter: **BASF IP Association**
**BASF SE**
**G-FLP-C006**
**67056 Ludwigshafen (DE)**

(54) **ENTSALZUNG VON POLYARYLETHERN MITTELS SCHMELZEEXTRAKTION**

(57) Die vorliegende Erfindung betrifft ein Verfahren zur Herstellung eines Polyarylether durch Umsetzung der Komponenten (a1) und (a2) in Gegenwart einer Carbonatverbindung (C) unter Erhalt eines salzhaltigen Polymers (sP), das den Polyarylether und ein Salz (S) enthält. Im Anschluss an die Umsetzung wird das Salz (S) aus dem salzhaltigen Polymer (sP) extrahiert unter Erhalt eines entsalzten Polymers (eP), das den Polyarylether enthält.

EP 3 222 651 A1

## Beschreibung

Die vorliegende Erfindung betrifft ein Verfahren zur Herstellung eines Polyarylethers durch Umsetzung der Komponenten (a1) und (a2) in Gegenwart einer Carbonatverbindung (C) unter Erhalt eines salzhaltigen Polymers (sP), das den Polyarylether und ein Salz (S) enthält. Im Anschluss an die Umsetzung wird das Salz (S) aus dem salzhaltigen Polymer (sP) extrahiert unter Erhalt eines entsalzten Polymers (eP), das den Polyarylether enthält.

Eine wirtschaftlich besonders bedeutende Gruppe von Polyarylether-Polymeren sind Polyarylethersulfone. Polyarylether-Polymere gehören zur Gruppe der Hochleistungsthermoplasten und zeichnen sich durch hohe Wärmeformbeständigkeit bei guten mechanischen Eigenschaften und einer inhärenten Flammwidrigkeit aus.

Die Herstellung von Polyarylether-Polymeren ist seit langem bekannt. Die Herstellung von Polyarylether-Polymeren erfolgt im Allgemeinen durch Polykondensation entsprechender aromatischer Dihydroxyverbindungen mit aromatischen Dihalogenverbindungen, wobei die Polykondensation in einem aprotisch-polaren Lösungsmittel in Gegenwart von Kaliumcarbonat als Base durchgeführt wird. Die Polyarylether-Polymere fallen im Herstellungsprozess in Form einer Lösung an, die die Polyarylether-Polymere gelöst in dem aprotisch-polaren Lösungsmittel enthält. Das während der Reaktion gebildete Kaliumhalogenid kann mechanisch, beispielsweise durch Zentrifugation oder Filtration, von der Lösung abgetrennt werden, so dass die Lösung und somit auch die nachfolgend isolierten Polyarylether-Polymere nur wenig oder sogar kein Kaliumhalogenid enthalten. Zur anschließenden Isolierung der Polyarylether-Polymere aus dem aprotisch-polaren Lösungsmittel sind im Stand der Technik verschiedene Methoden beschrieben.

Gemäß den in DE 19 57 091 und EP 0 000 361 beschriebenen Verfahren zur Isolierung von Polyarylether-Polymeren, die durch Polykondensation in einem aprotisch-polaren Lösungsmittel hergestellt werden, wird die Lösung, die die Polyarylether-Polymere gelöst in einem aprotisch-polaren Lösungsmittel enthält, in Wasser eingebracht und die Polyarylether-Polymere dadurch gefällt.

Die DE 36 44 464 und die EP 2 305 740 beschreiben ebenfalls Verfahren zur Herstellung von Polyarylether-Polymeren durch Polykondensation in einem aprotischpolaren Lösungsmittel. Die erhaltene Lösung, die die Polyarylether-Polymere gelöst in dem aprotisch-polaren Lösungsmittel enthält, wird anschließend in ein Fällbad vertropft, das Wasser enthält, und so die Polyarylether-Polymere in Form von Perlen erhalten.

Die EP 0 292 211 beschreibt ein Verfahren zur Herstellung von Arylpolyethern oder Thioethern, wobei ein Bisphenol, ein Bisthiophenol oder ein Hydroxyphenylmercaptan mit einer Dihalobenzoidverbindung in Gegenwart eines basischen Alkalimetallkatalysators in Kontakt gebracht wird, und wobei die Umsetzung in Gegenwart eines Lösungsmittels erfolgt. Die erhaltene Produktlösung wird mit Wasser in Kontakt gebracht und so das Alkalimetallhalid, das sich bei der Reaktion bildet, entfernt.

Die US 4,113, 698 beschreibt ein Verfahren zur Herstellung von Polyetherketonen durch nukleophile Polykondensation von einem Alkalimetall-Bisphenolat mit zumindest einer Dihaloverbindung und/oder einem Alkalimetallhalophenat in einem aromatischen Lösungsmittel. Die erhaltene Reaktionsmischung wird anschließend auskristallisiert oder gefällt und schließlich durch Mahlen auf eine geringe Partikelgröße gebracht und mit Wasser gewaschen.

Die WO 2010/046482 beschreibt ein Verfahren zur Herstellung von Polyetherketonen in Diphenylsulfon unter Erhalt einer Reaktionsmischung, die dann abgekühlt wird, so dass sie fest wird. Die feste Reaktionsmischung wird dann gemahlen und mit Aceton und Wasser extrahiert.

Allen im Stand der Technik beschriebenen Verfahren, bei denen Polyarylether-Polymere durch Polykondensation in einem aprotisch-polaren Lösungsmittel hergestellt werden, ist gemeinsam, dass sie nur einen geringen Gehalt an Kaliumhalogenid aufweisen. Allerdings kann das aprotisch-polare Lösungsmittel nicht vollständig aus den Polyarylether-Polymeren entfernt werden. Diese aprotisch-polaren Lösungsmittel sind folglich auch in Formteilen enthalten, die aus den nach den vorstehend beschriebenen Verfahren erhältlichen Polyarylether-Polymeren hergestellt werden.

Die aprotisch-polaren Lösungsmittel können beim Gebrauch der Formteile aus diesen migrieren. Die so erhaltenen Formteile sind daher aus toxikologischer Sicht nicht unbedenklich. Die Formteile sind deswegen insbesondere für Lebensmittelanwendungen häufig ungeeignet.

Um einen Restgehalt an aprotisch-polarem Lösungsmittel in den Polyarylether-Polymeren zu vermeiden, sind im Stand der Technik Schmelzepolymerisationsverfahren zur Herstellung von Polyarylether-Polymeren beschrieben.

Die DE 27 49 645 beschreibt ein Verfahren zur Herstellung von Polyarylethern in einem Schmelzepolymerisationsverfahren durch Polykondensation von mindestens einem Bisphenol mit mindestens einer Dihalogenbenzolverbindung oder von einem Halogenphenol in Gegenwart von wasserfreiem Alkalimetallcarbonat in Abwesenheit von Lösungs- oder Verdünnungsmitteln. Die Reaktion wird in einem Kneter oder in einem Extruder durchgeführt. Die anorganischen Bestandteile, die während der Kondensationsreaktion gebildet werden, beispielsweise Natrium- oder Kaliumchlorid, werden durch Lösen und anschließendes Filtrieren, Sieben oder Extrahieren aus den Polyarylethern entfernt.

Die WO 2014/033321 beschreibt ebenfalls ein Verfahren zur Herstellung von aromatischen Polyarylethern in einem Schmelzepolymerisationsverfahren durch Umsetzung einer Dichlordiphenylsulfonkomponente mit einer Bisphenolkomponente in Gegenwart eines Alkalimetallcarbonats in Abwesenheit von Lösungs- oder Verdünnungsmitteln, wobei die Reaktion in einem Mischkneter durchgeführt wird. Die so erhaltenen Polyarylether-Polymere werden auf eine Teilchengröße von etwa 2 mm vermahlen und zweimal für 3 Stunden bei 80 °C mit Wasser gewaschen, um das als Nebenprodukt gebildete Alkalimetallchlorid zu entfernen. Durch das in der WO 2014/033321 beschriebene Verfahren können jedoch nur 80 % des Akalimetallchlorids aus dem Polyarylether entfernt werden.

Die durch Schmelzepolymerisation hergestellten Polyarylether-Polymere weisen keinen Restgehalt an aprotisch-polarem Lösungsmittel auf.

Die GB 2 376 019 beschreibt ein Verfahren zur Reinigung von Polyketonen. Dabei werden die Polyketone mit Wasser und Extraktionsmittel in Kontakt gebracht. Während des Inkontaktbringens liegt das Polyketon in Form von Pulvern, Pellets oder Granalien vor.

Die CN 102 786 681 beschreibt ein Verfahren zur Reinigung von Polymeren vorzugsweise von Polyetherketonen. Das Polymer wird in fester Form als Pulver, in partikulärer Form oder in kreisförmiger Form eingesetzt. Anschließend wird es mit Wasser als Extraktionsmittel in Kontakt gebracht.

Der vorliegenden Erfindung liegt somit die Aufgabe zugrunde, ein verbessertes Verfahren zur Entsalzung eines salzhaltigen Polymers (sP), das einen Polyarylether und ein Salz (S) enthält, bereitzustellen. Das so hergestellte entsalzte Polymer (eP) soll einen geringen oder keinen Restgehalt an aprotisch-polaren Lösungsmitteln und einen reduzierten Restgehalt an Salz (S) im Vergleich zu den nach den Verfahren des Standes der Technik erhältlichen Polyarylether-Polymeren aufweisen. Das erfindungsgemäße Verfahren und die dadurch erhältlichen entsalzten Polymere (eP) sollen die Nachteile der im Stand der Technik beschriebenen Verfahren und der daraus erhältlichen Polymere nicht oder nur in vermindertem Maße aufweisen. Das erfindungsgemäße Verfahren soll dabei einfach, möglichst fehlerunanfällig und kostengünstig durchführbar sein.

Der vorliegenden Erfindung liegt daher die Aufgabe zugrunde, ein Verfahren zur Herstellung eines Polyarylethers bereitzustellen. Der so hergestellte Polyarylether soll die Nachteile der Polyarylether, wie sie im Stand der Technik beschrieben sind, nicht oder nur in vermindertem Maße aufweisen. Das erfindungsgemäße Verfahren soll dabei einfach, möglichst fehlerunanfällig und kostengünstig durchführbar sein.

Diese Aufgabe wird erfindungsgemäß gelöst durch ein Verfahren zur Herstellung eines Polyarylethers, der eine Erweichungstemperatur $T_E$ aufweist, umfassend die Schritte

I) Umsetzung der Komponenten

(a1) mindestens eine aromatische Dihydroxyverbindung und

(a2) mindestens eine aromatische Sulfonverbindung mit zwei Halogensubstituenten

in Gegenwart einer Carbonatverbindung (C) bei einer ersten Temperatur $T_{1-I}$. die oberhalb der Erweichungstemperatur $T_E$ des Polyarylethers liegt, in einem Mischkneter, unter Erhalt eines salzhaltigen Polymers (sP), das den Polyarylether und ein Salz (S) enthält,

II) Überführen des in Schritt I) erhaltenen salzhaltigen Polymers (sP) aus dem Mischkneter in einen Reaktor, der einen dynamischen Mischer umfasst, wobei das salzhaltige Polymer (sP) eine zweite Temperatur $T_{2-II,}$ die oberhalb der Erweichungstemperatur $T_E$ des Polyarylethers liegt, aufweist, und wobei der Reaktor ein Extraktionsmittel (E) enthält, das eine dritte Temperatur $T_{3-II,}$ die oberhalb der Erweichungstemperatur $T_E$ des Polyarylethers liegt, aufweist,

III) Extraktion des Salzes (S) aus dem salzhaltigen Polymer (sP) mit dem Extraktionsmittel (E) in dem Reaktor, der einen dynamischen Mischer umfasst, bei einer vierten Temperatur $T_{4-III}$, die oberhalb der Erweichungstemperatur $T_E$ des Polyarylethers liegt, unter Erhalt eines entsalzten Polymers (eP), das den Polyarylether enthält, und eines salzhaltigen Extraktionsmittels (sE), das das Extraktionsmittel (E) und das Salz (S) enthält.

Es wurde überraschend festgestellt, dass mit dem erfindungsgemäßen Verfahren im Vergleich zu den im Stand der Technik beschriebenen Verfahren im gleichen Zeitraum mehr Salz (S) aus dem salzhaltigen Polymer (sP) entfernt werden kann. Das heißt, das Salz (S) kann schneller aus dem salzhaltigen Polymer (sP) entfernt werden. Überraschenderweise kann mit dem erfindungsgemäßen Verfahren ein Salzgehalt von maximal 150 Gew.-ppm im entsalzten Polymer (eP) erreicht werden. Dadurch wird die Lagerstabilität des entsalzten Polymers (eP) deutlich erhöht gegenüber den Polyarylethern aus dem Stand der Technik, die durch ein Schmelzepolymerisationsverfahren hergestellt werden. Das entsalzte Polymer (eP) besitzt zudem eine gute Schmelzestabilität. Beim Wiederaufschmelzen wird also weder der Polyarylether abgebaut, noch schreitet die Polymerisation des Polyarylethers weiter fort.

Das entsalzte Polymer (eP) kann zudem zur Herstellung von Membranen eingesetzt werden.

Das erfindungsgemäße Verfahren ist außerdem insbesondere geeignet für die Entsalzung von salzhaltigen Polymeren (sP), die durch ein Schmelzepolymerisationsverfahren hergestellt worden sind. Werden in dem erfindungsgemäßen Verfahren durch Schmelzepolymerisationsverfahren hergestellte salzhaltige Polymere (sP) eingesetzt, so weisen die entsalzten Polymere (eP) keinen Restgehalt an Lösungsmittel auf. Somit sind die so erhältlichen entsalzten

Polymere (eP) auch für die Herstellung von Formteilen einsetzbar, die für Lebensmittelanwendungen geeignet sind.

Nachfolgend wird das erfindungsgemäße Verfahren näher erläutert.

Verfahren zur Herstellung eines Polyarylethers

Schritt I)

Im Verfahren zur Herstellung eines Polyarylethers werden erfindungsgemäß in Schritt I) die Komponenten (a1) und (a2) in Gegenwart einer Carbonatverbindung (C) bei einer ersten Temperatur $T_{1-I}$. die oberhalb der Erweichungstemperatur $T_E$ des Polyarylethers liegt, in einem Mischkneter umgesetzt. Dabei wird ein salzhaltiges Polymer (sP) erhalten. Das salzhaltige Polymer (sP) enthält den Polyarylether und ein Salz (S). Die Komponente (a1) ist mindestens eine aromatische Hydroxyverbindung. Die Komponente (a2) ist mindestens eine aromatische Sulfonverbindung mit zwei Halogensubstituenten.

"Eine Carbonatverbindung (C)" bedeutet im Rahmen der vorliegenden Erfindung sowohl genau eine Carbonatverbindung (C) als auch eine Mischung aus zwei oder mehreren Carbonatverbindungen (C).

Die Umsetzung der Komponenten (a1) und (a2) in Gegenwart der Carbonatverbindung (C) kann nach allen dem Fachmann bekannten Methoden erfolgen. Die Umsetzung kann in Anwesenheit mindestens eines Lösungs- und/oder Verdünnungsmittels erfolgen. Ebenso ist die Umsetzung in Abwesenheit eines Lösungs- und/oder Verdünnungsmittels möglich. Bevorzugt ist die Umsetzung in Abwesenheit eines Lösungs- und/oder Verdünnungsmittels.

Gegenstand der vorliegenden Erfindung ist daher auch ein Verfahren, bei dem die Komponenten (a1) und (a2) in Schritt I) in Gegenwart einer Carbonatverbindung (C) in Abwesenheit eines Lösungs- und/oder Verdünnungsmittels umgesetzt werden.

Geeignete Lösungs- und/oder Verdünnungsmittel für die Umsetzung der Komponenten (a1) und (a2) in Gegenwart einer Carbonatverbindung (C) sind dem Fachmann als solche bekannt und üblicherweise aprotisch-polare Lösungsmittel. Derartige aprotischpolaren Lösungsmittel sind beispielsweise ausgewählt aus der Gruppe bestehend aus N,N-Dimethylformamid, N,N-Dimethylacetamid, N-Methylpyrrolidon, N-Ethylpyrrolidon, Dimethylsulfoxid, Dimethylsulfon, Sulfolan, Diphenylsulfon und Mischungen daraus. Es ist daher erfindungsgemäß auch bevorzugt, dass die Umsetzung der Komponenten (a1) und (a2) in Schritt I) in Gegenwart der Carbonatverbindung (C) in Abwesenheit eines aprotisch-polaren Lösungsmittels ausgewählt aus der Gruppe bestehend aus N,N-Dimethylformamid, N,N-Dimethylacetamid, N-Methylpyrrolidon, N-Ethylpyrrolidon, Dimethylsulfoxid, Dimethylsulfon, Sulfolan, Diphenylsulfon und Mischungen daraus erfolgt, insbesondere bevorzugt erfolgt die Umsetzung der Komponenten (a1) und (a2) in Schritt I) in Gegenwart einer Carbonatverbindung (C) in Abwesenheit eines aprotisch-polaren Lösungsmittels.

Gegenstand der vorliegenden Erfindung ist daher auch ein Verfahren, bei dem die Umsetzung der Komponenten (a1) und (a2) in Schritt I) in Abwesenheit eines aprotisch-polaren Lösungsmittels ausgewählt aus der Gruppe bestehend aus N,N-Dimethylformamid, N,N-Dimethylacetamid, N-Methylpyrrolidon, N-Ethylpyrrolidon, Dimethylsulfoxid, Dimethylsulfon, Sulfolan, Diphenylsulfon und Mischungen daraus erfolgt.

Wie vorstehend beschrieben erfolgt die Umsetzung der Komponenten (a1) und (a2) in Gegenwart der Carbonatverbindung (C) in Schritt I) bevorzugt in Abwesenheit eines Lösungs- und/oder Verdünnungsmittels. Dabei ist es besonders bevorzugt, dass die Umsetzung in einem Schmelzepolymerisationsverfahren erfolgt. Schmelzepolymerisationsverfahren zur Herstellung von Polyarylethern sind beispielsweise in der DE 2 749 645 und in der WO 2014/033321 beschrieben.

Gegenstand der vorliegenden Erfindung ist somit auch ein Verfahren, bei dem die Umsetzung der Komponenten (a1) und (a2) in Schritt I) in Gegenwart einer Carbonatverbindung (C) durch ein Schmelzepolymerisationsverfahren erfolgt.

Bei einem Schmelzepolymerisationsverfahren werden die Komponenten (a1) und (a2) üblicherweise in geschmolzener Form miteinander umgesetzt unter Erhalt des salzhaltigen Polymers (sP), das ebenfalls in geschmolzener Form vorliegt.

Wenn die Komponenten (a1) und (a2) in geschmolzener Form vorliegen, so bedeutet dies, dass sie oberhalb ihres Schmelzpunktes vorliegen.

Liegt das salzhaltige Polymer (sP) in geschmolzener Form vor, so bedeutet dies, dass das salzhaltige Polymer (sP) bei einer Temperatur oberhalb der Schmelztemperatur des enthaltenen Polyarylethers vorliegt, wenn der Polyarylether teilkristallin ist. Erfindungsgemäß bevorzugt ist der Polyarylether amorph. "Das salzhaltige Polymer (sP) liegt in geschmolzener Form vor" bedeutet dann, dass das salzhaltige Polymer (sP) oberhalb der Erweichungstemperatur $T_E$, bevorzugt oberhalb der Glasübergangstemperatur $T_G$, des enthaltenen Polyarylethers vorliegt. Für die Erweichungstemperatur $T_E$ und die Glasübergangstemperatur $T_G$ des Polyarylethers gelten die weiter unten beschriebenen Ausführungen und Bevorzugungen.

Erfindungsgemäß erfolgt die Umsetzung der Komponenten (a1) und (a2) daher bei einer ersten Temperatur $T_{1-I,}$ die oberhalb der Erweichungstemperatur $T_E$, bevorzugt oberhalb der Glasübergangstemperatur $T_G$ des Polyarylethers liegt.

Gegenstand der vorliegenden Erfindung ist daher auch ein Verfahren, bei dem Schritt I) bei einer ersten Temperatur $T_{1-I}$. die oberhalb der Glasübergangstemperatur $T_G$ des Polyarylethers liegt, durchgeführt wird.

Für die Erweichungstemperatur $T_E$ des Polyarylethers und die Glasübergangstemperatur $T_G$ des Polyarylethers gelten die weiter unten beschriebenen Ausführungen und Bevorzugungen.

Die erste Temperatur $T_{1-I}$, bei der die Umsetzung der Komponenten (a1) und (a2) in Schritt I) erfolgt, liegt beispielsweise im Bereich von 200 bis 400 °C, bevorzugt im Bereich von 250 bis 350 °C.

Gegenstand der vorliegenden Erfindung ist daher auch ein Verfahren, bei dem die erste Temperatur $T_{1-I}$ in Schritt I) im Bereich von 200 bis 400 °C liegt.

Es versteht sich von selbst, dass die erste Temperatur $T_{1-I}$, bei der die Umsetzung der Komponenten (a1) und (a2) in Schritt I) erfolgt, üblicherweise unterhalb der Zersetzungstemperatur des Polyarylethers liegt. Vorzugsweise liegt die erste Temperatur $T_{1-I}$ mindestens 1 °C, bevorzugt mindestens 5 °C und insbesondere bevorzugt mindestens 10 °C unterhalb der Zersetzungstemperatur des Polyarylethers.

In Schritt I) werden die Komponente (a1) und die Komponente (a2) vorzugsweise in einem molaren Verhältnis im Bereich von 0,9 bis 1,4, besonders bevorzugt im Bereich von 1,0 bis 1,2 und insbesondere bevorzugt im Bereich von 1,0 bis 1,1 zueinander umgesetzt.

Gegenstand der vorliegenden Erfindung ist daher auch ein Verfahren, bei dem das molare Verhältnis der Komponente (a1) zu der Komponente (a2) bei der Umsetzung in Schritt I) im Bereich von 0,9 bis 1,4 liegt.

Die Carbonatverbindung (C) liegt in Schritt I) vorzugsweise in einem molaren Verhältnis zur Komponente (a1) von 0,9 bis 1,22, besonders bevorzugt von 1,0 bis 1,12 und insbesondere bevorzugt von 1,03 bis 1,10 vor.

Gegenstand der vorliegenden Erfindung ist daher auch ein Verfahren, bei dem das molare Verhältnis der Carbonatverbindung (C) zu der Komponente (a1) in Schritt I) im Bereich von 0,9 bis 1,22 liegt.

Es versteht sich von selbst, dass das molare Verhältnis der Komponente (a1) zu der Komponente (a2) sich ebenso wie das molare Verhältnis der Carbonatverbindung (C) zur Komponente (a1) auf das molare Verhältnis zu Beginn der Umsetzung in Schritt I) bezieht, also bevor die Komponenten (a1) und (a2) sowie die Carbonatverbindung (C) in Schritt I) miteinander reagiert haben.

Die Komponenten (a1) und (a2) werden erfindungsgemäß in einem Mischkneter umgesetzt. Geeignete Mischkneter sind dem Fachmann als solche bekannt. Bevorzugt sind Ein- oder Doppelwellenkneter, wobei Doppelwellenkneter besonders bevorzugt sind. Es ist außerdem bevorzugt, dass der Mischkneter zusätzlich einen Rückflusskondensator umfasst, um flüchtiges Monomer, das bei den Reaktionstemperaturen gegebenenfalls verdampft, in den Mischkneter rückzuführen.

Zur Umsetzung der Komponenten (a1) und (a2) in Schritt I) werden beispielsweise die Komponenten (a1) und (a2) in dem Mischkneter vorgelegt und anschließend die Carbonatverbindung (C) zugeführt.

Dabei ist es bevorzugt, dass die Komponenten (a1) und (a2) dem Mischkneter in fester Form zugeführt und dann darin zunächst aufgeschmolzen werden und anschließend die Carbonatverbindung (C) zugeführt wird.

Darüber hinaus ist es möglich, die Carbonatverbindung (C) mit einer der beiden Komponenten (a1) oder (a2) vorzulegen und anschließend die zweite der beiden Komponenten (a1) oder (a2) zuzugeben.

Dabei ist es bevorzugt, die Carbonatverbindung (C) mit der Komponente (a1) vorzulegen. Im Allgemeinen wird dann zunächst die Komponente (a1) mit der Carbonatverbindung (C) umgesetzt unter Bildung eines Dialkoholats. Anschließend wird die Komponente (a2) zugegeben.

Erfindungsgemäß ist es besonders bevorzugt, die Komponenten (a1) und (a2) sowie die Carbonatverbindung (C) jeweils in Form eines Pulvers vorzumischen und diese Mischung dann dem Mischkneter zuzuführen. In dem Mischkneter wird die Mischung dann aufgeschmolzen und die Komponenten (a1) und (a2) umgesetzt.

Die Komponenten (a1) und (a2) können in flüssiger oder in fester Form in den Mischkneter eingebracht werden. Bevorzugt werden sie in fester Form in den Mischkneter eingebracht. Werden die Komponenten (a1) und/oder (a2) in fester Form in den Mischkneter eingebracht, so können sie beispielsweise als Pulver oder Granulat in den Mischkneter eingebracht werden.

Die Umsetzung der Komponenten (a1) und (a2) in dem Mischkneter kann über einen beliebigen Zeitraum erfolgen. Bevorzugt liegt die Umsetzungszeit der Komponenten (a1) und (a2) in dem Mischkneter im Bereich von 0,5 bis 3,5 Stunden, besonders bevorzugt im Bereich von 1,5 bis 3 Stunden.

Die Umsetzung der Komponenten (a1) und (a2) in Gegenwart der Carbonatverbindung (C) ist eine Kondensationsreaktion. Derartige Kondensationsreaktionen sind dem Fachmann als solche bekannt.

Bei der Umsetzung der Komponente (a1) und der Komponente (a2) in Gegenwart der Carbonatverbindung (C) in Schritt I) werden üblicherweise neben dem Polyarylether Wasser, Kohlenstoffdioxid und das Salz (S) gebildet.

Das gebildete Wasser und das gebildete Kohlenstoffdioxid können während der Umsetzung als gasförmige Bestandteile aus dem Mischkneter entfernt werden. Das Salz (S) verbleibt im Allgemeinen im Polyarylether, sodass bei der Umsetzung der Komponenten (a1) und (a2) das salzhaltige Polymer (sP) erhalten wird.

Für das salzhaltige Polymer (sP) sowie das Salz (S) gelten die weiter unten beschriebenen Ausführungen und

Bevorzugungen.

Komponente (a1)

Erfindungsgemäß ist die Komponente (a1) mindestens eine aromatische Dihydroxyverbindung. Beispielsweise ist die Komponente (a1) ausgewählt aus der Gruppe bestehend aus

- 4,4' Dihydroxybiphenyl;
- Dihydroxybenzolen, insbesondere Hydrochinon und Resorcin;
- Dihydroxynaphthalinen, insbesondere 1,5-Dihydroxynaphthalin, 1,6-Dihydroxynaphthalin, 1,7- Dihydroxynaphthalin, und 2,7- Dihydroxynaphthalin;
- Anderen Dihydroxybiphenylen als 4,4'-Biphenol, insbesondere 2,2'-Biphenol;
- Bisphenylethern, insbesondere Bis(4-hydroxyphenyl)ether und Bis(2-hydroxyphenyl)ether;
- Bisphenylpropanen, insbesondere 2,2-Bis(4-hydroxyphenyl)propan, 2,2-Bis(3-methyl-4-hydroxyphenyl)propan, und 2,2-Bis(3,5-dimethyl-4-hydroxyphenyl)propan;
- Bisphenylmethanen, insbesondere Bis(4-hydroxyphenyl)methan
- Bisphenylcyclohexanen, insbesondere Bis(4-hydroxyphenyl)-2,2,4-trimethylcyclohexan;
- Bisphenylsulfonen, insbesondere Bis(4-hydroxyphenyl)sulfon;
- Bisphenylsulfiden, insbesondere Bis(4-hydroxyphenyl)sulfid;
- Bisphenylketonen, insbesondere Bis(4-hydroxyphenyl)keton;
- Bisphenylhexafluoropropanen, insbesondere 2,2-Bis(3,5-dimethyl-4-hydroxyphenyl)hexafluoropropan; und
- Bisphenylfluorenen, insbesondere 9,9-Bis(4-hydroxyphenyl)fluoren.

Vorzugsweise enthält die Komponente (a1) mindestens 50 Gew.-%, mehr bevorzugt mindestens 60 Gew.-%, besonders bevorzugt mindestens 80 Gew.-% und insbesondere mindestens 95 Gew.-% mindestens einer Dihydroxykomponente ausgewählt aus der Gruppe bestehend aus 4,4'-Dihydroxybiphenyl, 2,2-Bis(4-hydroxyphenyl)propan und Bis(4-hydroxyphenyl)sulfon, jeweils bezogen auf das Gesamtgewicht der Komponente (a1). Ganz besonders bevorzugt besteht die Komponente (a1) aus mindestens einer Dihydroxykomponente ausgewählt aus der Gruppe bestehend aus 4,4'-Dihydroxybiphenyl, 2,2-Bis(4-hydroxyphenyl)propan und Bis(4-hydroxyphenyl)sulfon.

2,2-Bis(4-hydroxyphenyl)propan ist auch bekannt unter dem Namen Bisphenol A. Bis(4-hydroxyphenyl)sulfon ist auch bekannt unter dem Namen Bisphenol S.

Gegenstand der vorliegenden Erfindung ist daher auch ein Verfahren, bei dem die Komponente (a1) ausgewählt ist aus der Gruppe bestehend aus 4,4'-Dihydroxybiphenyl, 2,2-Bis(4-hydroxyphenyl)propan und Bis(4-hydroxyphenyl)sulfon.

Komponente (a2)

Die Komponente (a2) ist erfindungsgemäß mindestens eine aromatische Sulfonverbindung mit zwei Halogensubstituenten.

Derartige Komponenten (a2) sind dem Fachmann als solche bekannt. Bevorzugt ist die Komponente (a2) ein Dihalogendiphenylsulfon. Es ist daher bevorzugt, dass die Komponente (a2) ausgewählt ist aus der Gruppe bestehend aus 4,4'-Dichlordiphenylsulfon, 4,4'-Difluordiphenylsulfon, 4,4'-Dibromdiphenylsulfon, 2,2'-Dichlordiphenylsulfon und 2,2'-Difluordiphenylsulfon, besonders bevorzugt ist die Komponente (a2) ausgewählt aus der Gruppe bestehend aus 4,4'-Dichlordiphenylsulfon und 4,4'-Difluordiphenylsulfon, am meisten bevorzugt ist die Komponenten (a2) 4,4'-Dichlordiphenylsulfon.

Gegenstand der vorliegenden Erfindung ist daher auch ein Verfahren, bei dem die Komponente (a2) ausgewählt ist aus der Gruppe bestehend aus 4,4'-Dichlordiphenylsulfon, 4,4'-Difluordiphenylsulfon, 4,4'-Dibromdiphenylsulfon, 2,2'-Dichlordiphenylsulfon und 2,2'-Difluordiphenylsulfon.

Carbonatverbindung (C)

Geeignete Carbonatverbindungen (C) sind dem Fachmann als solche bekannt. Bevorzugt ist die Carbonatverbindung (C) ein Alkalimetallcarbonat und/oder ein Erdalkalimetallcarbonat. Vorzugsweise ist die Carbonatverbindung (C) wasserfrei.

Bevorzugt ist die Carbonatverbindung (C) daher ein wasserfreies Alkalimetallcarbonat, wobei wasserfreies Natriumcarbonat, wasserfreies Kaliumcarbonat und Mischungen davon besonders bevorzugt sind, insbesondere bevorzugt als Carbonatverbindung (C) ist wasserfreies Kaliumcarbonat.

Salzhaltiges Polymer (sP)

In Schritt I) wird das salzhaltige Polymer (sP) erhalten.

Das salzhaltige Polymer (sP) enthält den Polyarylether und das Salz (S).

Unter "einem Polyarylether" wird erfindungsgemäß genau ein Polyarylether ebenso wie Mischungen aus zwei oder mehreren Polyarylethern verstanden.

Unter "ein Salz (S)" wird im Rahmen der vorliegenden Erfindung sowohl genau ein Salz (S) als auch Mischungen aus zwei oder mehreren Salzen (S) verstanden.

Beispielsweise enthält das salzhaltige Polymer (sP) mindestens 50 Gew.-%, besonders bevorzugt mindestens 60 Gew.-%, mehr bevorzugt mindestens 65 Gew.-% und insbesondere bevorzugt mindestens 70 Gew.-% des Polyarylethers, jeweils bezogen auf das Gesamtgewicht des salzhaltigen Polymers (sP).

Es ist außerdem bevorzugt, dass das salzhaltige Polymer (sP) höchstens 99,98 Gew.-%, bevorzugt höchstens 99 Gew.-%, mehr bevorzugt höchstens 90 Gew.-% und insbesondere bevorzugt höchstens 80 Gew.-% des Polyarylethers enthält, jeweils bezogen auf das Gesamtgewicht des salzhaltigen Polymers (sP).

Bevorzugt enthält das salzhaltige Polymer (sP) 50 bis 99,98 Gew.-% des Polyarylethers, besonders bevorzugt 60 bis 99 Gew.-% des Polyarylethers, insbesondere bevorzugt 65 bis 90 Gew.-% des Polyarylethers und am meisten bevorzugt 70 bis 80 Gew.-% des Polyarylethers, jeweils bezogen auf das Gesamtgewicht des salzhaltigen Polymers (sP).

Das salzhaltige Polymer (sP) enthält üblicherweise mindestens 0,02 Gew.-%, bevorzugt mindestens 1 Gew.-%, besonders bevorzugt mindestens 10 Gew.-% und insbesondere bevorzugt mindestens 20 Gew.-% des Salzes (S), jeweils bezogen auf das Gesamtgewicht des salzhaltigen Polymers (sP).

Beispielsweise enthält das salzhaltige Polymer (sP) höchstens 50 Gew.-%, bevorzugt höchstens 40 Gew.-%, mehr bevorzugt höchstens 35 Gew.-% und insbesondere bevorzugt höchstens 30 Gew.-% des Salzes (S), jeweils bezogen auf das Gesamtgewicht des salzhaltigen Polymers (sP).

Es ist bevorzugt, dass das salzhaltige Polymer (sP) 0,02 bis 50 Gew.-% des Salzes (S) enthält, besonders bevorzugt 1 bis 40 Gew.-% des Salzes (S), insbesondere bevorzugt 10 bis 35 Gew.-% und am meisten bevorzugt 20 bis 30 Gew.-% des Salzes (S), jeweils bezogen auf das Gesamtgewicht des salzhaltigen Polymers (sP).

Es ist möglich, dass das salzhaltige Polymer (sP) zusätzlich Additive enthält. Geeignete Additive sind dem Fachmann als solche bekannt. Derartige Additive werden üblicherweise mit den Komponenten (a1) und (a2) in Schritt I) umgesetzt und/oder die Umsetzung der Komponenten (a1) und (a2) in Schritt I) erfolgt in Gegenwart der Additive.

Für den Fall, dass das salzhaltige Polymer (sP) zusätzlich Additive enthält, enthält das salzhaltige Polymer (sP) im Allgemeinen 0,01 bis 10 Gew.-% Additive, bevorzugt 0,01 bis 7 Gew.-% Additive und insbesondere bevorzugt 0,01 bis 5 Gew.-% Additive, jeweils bezogen auf das Gesamtgewicht des salzhaltigen Polymers (sP).

In einer Ausführungsform enthält das salzhaltige Polymer (sP) keine zusätzlichen Additive.

Darüber hinaus kann das salzhaltige Polymer (sP) die Carbonatverbindung (C) enthalten. Für die Carbonatverbindung (C) gelten die vorstehend beschriebenen Ausführungen und Bevorzugungen. Für den Fall, dass das salzhaltige Polymer (sP) die Carbonatverbindung (C) enthält, enthält das salzhaltige Polymer (sP) im Bereich von 0,01 bis 20 Gew.-%, bevorzugt im Bereich von 0,01 bis 5 Gew.-% und insbesondere bevorzugt im Bereich von 0,01 bis 2 Gew.-% der Carbonatverbindung (C), bezogen auf das Gesamtgewicht des salzhaltigen Polymers (sP). Die Carbonatverbindung (C) ist von dem Salz (S) verschieden. In einer Ausführungsform enthält das salzhaltige Polymer (sP) keine Carbonatverbindungen (C).

Üblicherweise enthält das salzhaltige Polymer (sP) 50 bis 99,98 Gew.-% des Polyarylethers und 0,02 bis 50 Gew.-% des Salzes (S), bevorzugt 60 bis 99 Gew.-% des Polyarylethers und 1 bis 40 Gew.-% des Salzes (S), insbesondere bevorzugt 65 bis 90 Gew.-% des Polyarylethers und 10 bis 35 Gew.-% des Salzes (S) und am meisten bevorzugt 70 bis 80 Gew.-% des Polyarylethers und 20 bis 30 Gew.-% des Salzes (S), jeweils bezogen auf das Gesamtgewicht des salzhaltigen Polymers (sP).

Im Allgemeinen ergeben die Summen der Gewichtsprozente des Polyarylethers, des Salzes (S) und gegebenenfalls der zusätzlichen Additive sowie der Carbonatverbindung (C) 100 %.

Die Viskositätszahlen des salzhaltigen Polymers (sP) liegen im Allgemeinen im Bereich von 15 bis 90 ml/g, bevorzugt von 22,5 bis 75 ml/g und insbesondere bevorzugt von 26,25 bis 71,25 ml/g, bestimmt durch Ubbelohde-Viskositätszahlmessung einer 0,01 g/ml Lösung des salzhaltigen Polymers (sP) in einer 1 : 1 Phenol/1,2-Dichlorbenzol-Mischung nach DIN 51562.

Die Viskositätszahl des salzhaltigen Polymers (sP) liegt üblicherweise niedriger als die Viskositätszahl des entsalzten Polymers (eP).

Salz (S)

Im Allgemeinen enthält das Salz (S) ein Kation und ein Halogenid, bevorzugt ein Kation und ein Chlorid. Ein Halogenid wird auch als "Halogenidanion" bezeichnet. Ein Chlorid wird auch als "Chloridanion" bezeichnet.

Unter "ein Kation" wird erfindungsgemäß sowohl genau ein Kation als auch Mischungen aus zwei oder mehreren Kationen verstanden.

Unter "ein Halogenid" wird erfindungsgemäß sowohl genau ein Halogenid als auch Mischungen aus zwei oder mehreren Halogeniden verstanden.

Im Allgemeinen handelt es sich bei dem Salz (S) um ein anorganisches Salz, wenn als Carbonatverbindung (C) eine anorganische Carbonatverbindung (C) eingesetzt wird. Bevorzugt handelt es sich bei dem Salz (S) um ein Alkalimetallhalogenid, wenn als Carbonatverbindung (C) ein Alkalimetallcarbonat eingesetzt wird. Am meisten bevorzugt handelt es sich bei dem Salz (S) um Kaliumchlorid und/oder Natriumchlorid, wenn als Carbonatverbindung (C) Kaliumcarbonat und/oder Natriumcarbonat eingesetzt wird.

Gegenstand der vorliegenden Erfindung ist daher auch ein Verfahren, bei dem das Salz (S) Kaliumchlorid und/oder Natriumchlorid enthält.

Die Gew.-% des Salzes (S) in dem salzhaltigen Polymer (sP) können daher über die Messung der Gew.-% des Halogenids, bevorzugt des Chlorids in dem salzhaltigen Polymer (sP) bestimmt werden. Unter den Gew.-% des Halogenids sind die Gew.-% des anionischen Halogens zu verstehen, also die Gew.-% des freien Halogenids und nicht die Gew.-% des polymergebundenen Halogens. Entsprechendes gilt für die Gew.-% des Chlorids. Diese beziehen sich auf die Gew.-% des ionischen Chlors und somit auf die Gew.-% des freien Chlorids und nicht auf die Gew.-% des polymergebundenen Chlors.

Zur Bestimmung der Gew.-% an Halogenid, bevorzugt an Chlorid in dem salzhaltigen Polymer (sP), werden 700 mg des salzhaltigen Polymers (sP) in N-Methyl-pyrrolidon (NMP) gelöst und die erhaltene Lösung mit einer Essigsäure-/Aceton-Mischung (Verhältnis von Essigsäure zu Aceton: 1:1) verdünnt. Die so erhaltene Lösung wird mit Schwefelsäure oder Salpetersäure angesäuert und anschließend mit einer 0,0002 mol/l Silbernitratlösung potentiometrisch titriert, wobei Methylorange als Indikator eingesetzt wird. Als Elektrode dient eine Ag-Titrode der Firma Metrohm.

Über die Gew.-% an Halogenid können anschließend die Gew.-% des ebenfalls im Salz (S) enthaltenen Kations im salzhaltigen Polymer (sP) errechnet werden. Methoden hierzu sind dem Fachmann bekannt. Aus der Summe der Gew.-% des Halogenids sowie der Gew.-% des Kations im salzhaltigen Polymer ergeben sich dann die Gew.-% des Salzes (S) im salzhaltigen Polymer (sP).

Die Gew.-% an Salz (S) in dem nachfolgend beschriebenen entsalzten Polymer (eP) werden erfindungsgemäß in gleicher Weise bestimmt.

Polyarylether

Polyarylether sind dem Fachmann als Polymerklasse bekannt.

Erfindungsgemäß bevorzugte Polyarylether sind aus Bausteinen der allgemeinen Formel (I) aufgebaut:

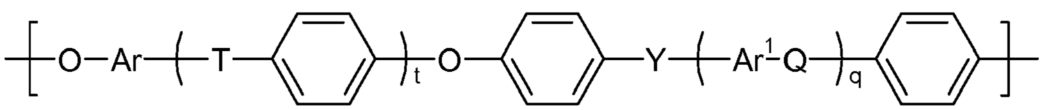

(I),

wobei die Symbole t, q, Q, T, Y, Ar und $Ar^1$ folgende Bedeutungen aufweisen:

- t, q: unabhängig voneinander 0, 1, 2 oder 3,
- Q, T, Y: unabhängig voneinander jeweils eine chemische Bindung oder Gruppe, ausgewählt aus -O-, -S-, $-SO_2-$, S=O, C=O, -N=N- und $-CR^aR^b-$, wobei $R^a$ und $R^b$ unabhängig voneinander jeweils für ein Wasserstoffatom oder eine $C_1$-$C_{12}$-Alkyl-, $C_1$-$C_{12}$-Alkoxy- oder $C_6$-$C_{18}$-Arylgruppe stehen, und wobei wenigstens eines aus Q, T und Y für $-SO_2-$ steht und
- Ar, $Ar^1$: unabhängig voneinander eine Arylengruppe mit von 6 bis 18 Kohlenstoffatomen.

Falls Q, T oder Y unter den oben genannten Voraussetzungen eine chemische Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel (I) allerdings unabhängig voneinander ausgewählt aus -O- und $-SO_2-$, mit der Maßgabe, dass wenigstens eines aus der Gruppe bestehend aus Q, T und Y für $-SO_2-$ steht. Diese Polyarylether sind Polyarylethersulfone.

Gegenstand der vorliegenden Erfindung ist somit auch ein Verfahren, bei dem der Polyarylether ein Polyarylethersulfon ist.

Sofern Q, T oder Y $-CR^aR^b-$ sind, stehen $R^a$ und $R^b$ unabhängig voneinander jeweils für ein Wasserstoffatom

oder eine $C_1$-$C_{12}$-Alkyl-, $C_1$-$C_{12}$-Alkoxy- oder $C_6$-$C_{18}$-Arylgruppe.

Bevorzugte $C_1$-$C_{12}$-Alkylgruppen umfassen lineare und verzweigte, gesättigte Alkylgruppen mit von 1 bis 12 Kohlenstoffatomen. Insbesondere sind folgende Reste zu nennen: $C_1$-$C_6$-Alkylrest, wie Methyl, Ethyl, n-Propyl, i-Propyl, n-Butyl, sek-Butyl, 2-oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren $C_1$-$C_{12}$-Alkoxygruppen kommen die weiter oben definierten Alkylgruppen mit von 1 bis 12 Kohlenstoffatomen in Betracht. Vorzugsweise verwendbare Cycloalkylreste umfassen insbesondere $C_3$-$C_{12}$-Cycloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclpentylethyl, -propyl, -butyl, -pentyl, -hexyl, Cyclohexylmethyl, -dimethyl, und -trimethyl.

Ar und $Ar^1$ bedeuten unabhängig voneinander eine $C_6$-$C_{18}$-Arylengruppe. Ausgehend von den weiter oben beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist $Ar^1$ eine unsubstituierte $C_6$- oder $C_{12}$-Arylengruppe.

Als $C_6$-$C_{18}$-Arylengruppen Ar und $Ar^1$ kommen insbesondere Phenylengruppen, wie 1,2-, 1,3- und 1,4-Phenylen, Naphthylengruppen, wie beispielsweise 1,6-, 1,7-, 2,6- und 2,7-Naphthylen, sowie die von Anthracen, Phenanthren und Naphthacen abgeleiteten Arylengruppen in Betracht.

Vorzugsweise werden Ar und $Ar^1$ in der bevorzugten Ausführungsform gemäß Formel (I) unabhängig voneinander ausgewählt aus der Gruppe bestehend aus 1,4-Phenylen, 1,3-Phenylen, Naphthylen, insbesondere 2,7-Dihydroxynaphthylen, und 4,4'-Bisphenylen.

Bevorzugte Polyarylether sind solche, die mindestens eine der folgenden Bausteine Ia bis Io als wiederkehrende Struktureinheiten enthalten:

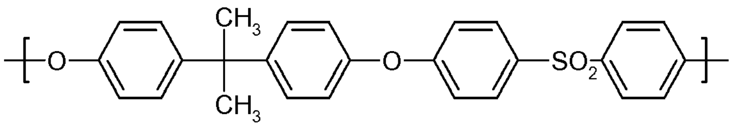

Ia

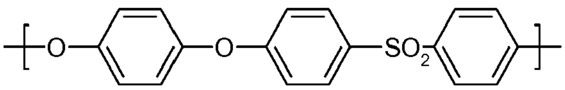

Ib

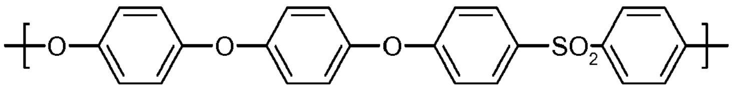

Ic

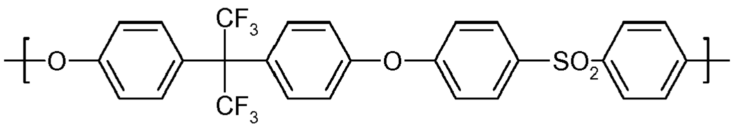

Id

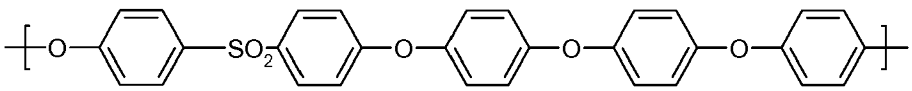

Ie

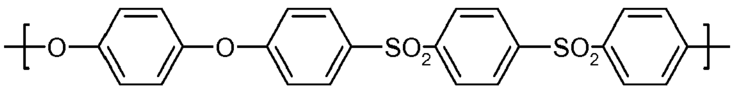

If

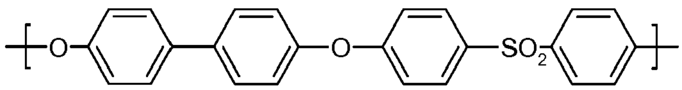

Ig

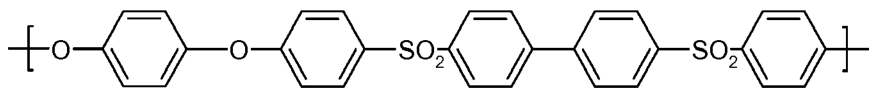

Ih

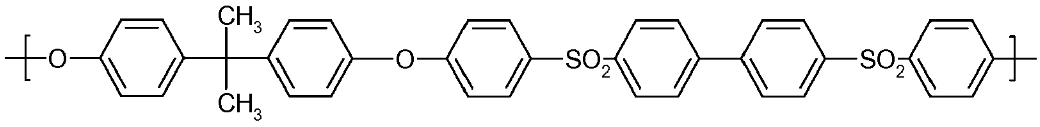

Ii

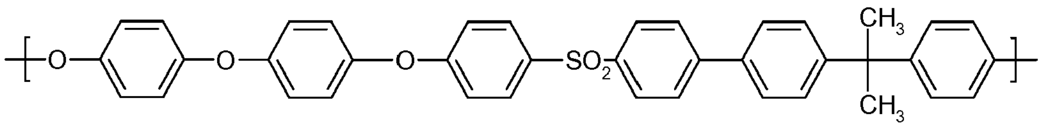

Ij

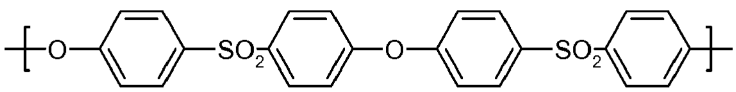

Ik

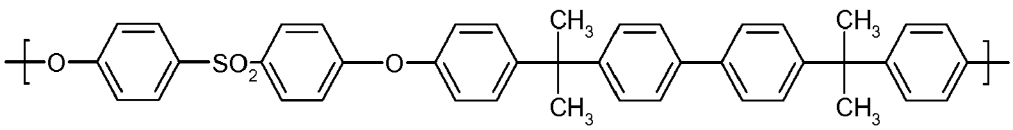

I l

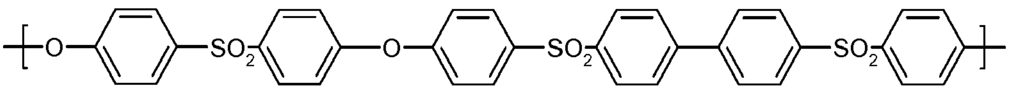

Im

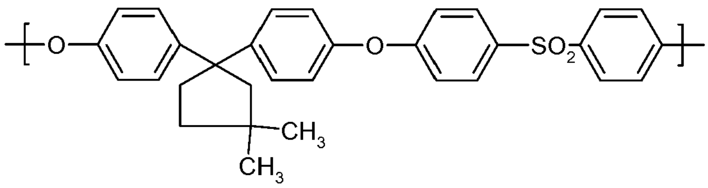

In

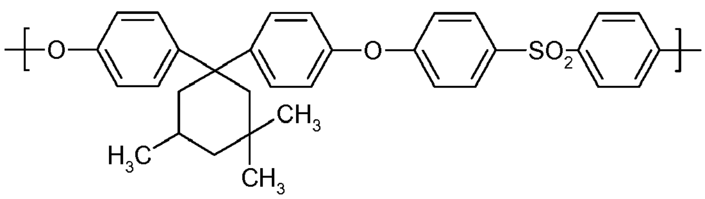

Io

Zusätzlich zu den bevorzugten Bausteinen Ia bis Io sind auch solche Bausteine bevorzugt, in denen eine oder mehrere 1,4-Phenyleneinheiten, die von Hydrochinon abstammen, durch 1,3-Phenyleneinheiten, die von Resorcin abstammen, oder durch Naphthyleneinheiten, die von Dihydroxynaphthalin abstammen, ersetzt sind.

Als Bausteine der allgemeinen Formel (I) besonders bevorzugt sind die Bausteine Ia, Ig und Ik. Es ist außerdem besonders bevorzugt, wenn die Polyarylether im Wesentlichen aus einer Sorte Bausteine der allgemeinen Formel (I), insbesondere aus einem Baustein ausgewählt aus Ia, Ig und Ik aufgebaut sind.

In einer besonders bevorzugten Ausführungsform ist Ar = 1,4-Phenylen, t = 1, q = 0, T ist eine chemische Bindung und Y = $SO_2$. Aus der vorgenannten Wiederholungseinheit aufgebaute besonders bevorzugte Polyarylethersulfone werden als Polyphenylensulfon (PPSU) bezeichnet (Formel Ig).

In einer weiteren besonders bevorzugten Ausführungsform ist Ar = 1,4-Phenylen, t = 1, q = 0, T = $C(CH_3)_2$ und Y = $SO_2$. Aus der vorgenannten Wiederholungseinheit aufgebaute besonders bevorzugte Polyarylethersulfone werden als Polysulfon (PSU) bezeichnet (Formel Ia).

In einer weiteren besonders bevorzugten Ausführungsform ist Ar = 1,4-Phenylen, t = 1, q = 0, T = Y = $SO_2$.

Aus der vorgenannten Wiederholungseinheit aufgebaute besonders bevorzugte Polyarylethersulfone werden als Polyethersulfon (PESU) bezeichnet (Formel Ik).

Abkürzungen wie PPSU, PSU und PESU entsprechen im Rahmen der vorliegenden Erfindung der DIN EN ISO 1043-1 (Kunststoffe - Kennbuchstaben und Kurzzeichen - Teil 1: Basis-Polymere und ihre besonderen Eigenschaften (ISO 1043-1:2001); Deutsche Fassung EN ISO 1043-1:2002).

Die Polyarylether weisen vorzugsweise gewichtsmittlere Molekulargewichte $M_w$ von 10.000 bis 150.000 g/mol, insbesondere von 15.000 bis 120.000 g/mol, besonders bevorzugt von 18.000 bis 100.000 g/mol auf, bestimmt mittels Gelpermeationschromatographie im Lösungsmittel Dimethylacetamid gegen engverteiltes Polymethylmethacrylat als Standard.

Die Polyarylether weisen vorzugsweise ein zahlenmittleres Molekulargewicht $M_n$ von 10 000 bis 35 000 g/mol auf, bestimmt mittels Gelpermeationschromatographie im Lösungsmittel Dimethylacetamid gegen engverteiltes Polymethylmethacrylat als Standard.

Die Polydispersität beträgt bevorzugt von 1,9 bis 7,5, besonders bevorzugt von 2,1 bis 4.

Darüber hinaus weisen die Polyarylether in Reinsubstanz vorzugsweise eine scheinbare Schmelzviskosität bei 350 °C/1150 $s^{-1}$ von 100 bis 1 000 Pa s, bevorzugt von 150 bis 300 Pa s und insbesondere bevorzugt von 150 bis 275 Pa s auf.

Die Schmelzeviskosität wurde mittels eines Kapillarrheometers bestimmt. Dabei wurde die scheinbare Viskosität bei 350°C als Funktion der Scherrate in einem Kapillarviskosimeter (Göttfert Kapillarviskosimeter Rheograph 2003) mit einer Kreiskapillare der Länge 30 mm, einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt. Angegeben sind die bei 1150 $s^{-1}$ bestimmten Werte.

Die Erweichungstemperatur $T_E$ des Polyarylethers liegt üblicherweise im Bereich von 150 bis 230 °C, bevorzugt im Bereich von 155 bis 230 °C und insbesondere bevorzugt im Bereich von 160 bis 180 °C, bestimmt mittels dynamischer Differenzkalorimetrie. Verfahren hierzu sind dem Fachmann bekannt.

Unter der Erweichungstemperatur $T_E$ des Polyarylethers wird vorliegend die Glasübergangstemperatur des reinen Polyarylethers, der 2 bis 30 Gew.-% des Extraktionsmittels (E), bezogen auf das Gesamtgewicht des Polyarylethers und des Extraktionsmittels (E), enthält, verstanden, wobei der Polyarylether kein Salz (S) enthält.

Bevorzugt wird unter der Erweichungstemperatur $T_E$ des Polyarylethers die Glasübergangstemperatur des reinen Polyarylethers, der 15 Gew.-% des Extraktionsmittels (E), bezogen auf das Gesamtgewicht des Polyarylethers und des Extraktionsmittels (E), enthält, verstanden, wobei der Polyarylether kein Salz (S) enthält.

Die Erweichungstemperatur $T_E$ des Polyarylethers kann daher analog zur Glasübergangstemperatur $T_G$ des Polyarylethers bestimmt werden.

Es versteht sich von selbst, dass die Erweichungstemperatur $T_E$ des Polyarylethers unterhalb der Glasübergangstemperatur $T_G$ des Polyarylethers liegt.

Gegenstand der vorliegenden Erfindung ist somit auch ein Verfahren, bei dem die Erweichungstemperatur $T_E$ des Polyarylethers im Bereich von 150 bis 230 °C liegt.

Die Glasübergangstemperatur $T_G$ des Polyarylethers liegt üblicherweise im Bereich von 160 bis 270 °C, bevorzugt im Bereich von 170 bis 250 °C und insbesondere bevorzugt im Bereich von 180 bis 230 °C, bestimmt durch Differenzthermoanalyse (DTA; differential calorimetry; DSC).

Verfahren zur Bestimmung der Glasübergangstemperatur $T_G$ durch Differenzthermoanalyse sind dem Fachmann als solche bekannt.

Unter der Glasübergangstemperatur $T_G$ wird die Temperatur verstanden, bei der der Polyarylether beim Abkühlen zu einem glasartigen Feststoff erstarrt.

Gegenstand der vorliegenden Erfindung ist somit auch ein Verfahren, bei dem die Glasübergangstemperatur $T_G$ des Polyarylethers im Bereich von 160 °C bis 270 °C liegt.

Die erfindungsgemäßen Polyarylether sind üblicherweise amorph. "Amorph" bedeutet im Rahmen der vorliegenden Erfindung, dass die Polyarylether keine Schmelztemperatur $T_M$ aufweisen. Sie weisen nur eine Glasübergangstemperatur $T_G$ auf. Bei der Glasübergangstemperatur $T_G$ geht der Polyarylether vom festen Zustand in den geschmolzenen Zustand über.

Gegenstand der vorliegenden Erfindung ist daher auch ein Verfahren, bei dem der Polyarylether amorph ist.

<u>Schritt II)</u>

In Schritt II) wird das in Schritt I) erhaltene salzhaltige Polymer (sP) aus dem Mischkneter in einen Reaktor, der einen dynamischen Mischer umfasst, überführt. Während der Überführung weist das salzhaltige Polymer (sP) eine zweite Temperatur $T_{2-II}$ auf, die oberhalb der Erweichungstemperatur $T_E$ des Polyarylethers liegt, auf. Der Reaktor, in den das salzhaltige Polymer (sP) überführt wird, enthält ein Extraktionsmittel (E), das eine dritte Temperatur $T_{3-II}$, die oberhalb der Erweichungstemperatur $T_E$ des Polyarylethers liegt, aufweist.

In Schritt II) wird das salzhaltige Polymer (sP) aus dem Mischkneter in den Reaktor überführt. Das Überführen des salzhaltigen Polymers (sP) in Schritt II) kann sowohl direkt als auch indirekt von dem Mischkneter in den Reaktor erfolgen. Bevorzugt erfolgt das Überführen direkt.

Erfolgt das Überführen des in Schritt I) erhaltenen salzhaltigen Polymers (sP) aus dem Mischkneter in den Reaktor indirekt, so kann beispielsweise das in Schritt I) erhaltene salzhaltige Polymer (sP) aus dem Mischkneter ausgetragen und beispielsweise granuliert werden und anschließend in den Reaktor überführt werden.

Wie vorstehend beschrieben, erfolgt das Überführen des in Schritt I) erhaltenen salzhaltigen Polymers (sP) aus dem Mischkneter in den Reaktor bevorzugt direkt, d.h. ohne Zwischenschritte.

Das salzhaltige Polymer (sP) kann, um es aus dem Mischkneter in den Reaktor direkt zu überführen, nach allen dem Fachmann bekannten Methoden aus dem Mischkneter ausgetragen werden. Vorzugsweise wird das salzhaltige Polymer (sP) als salzhaltige Schmelze mittels einer Pumpe durch eine Rohrleitung in den Reaktor überführt. Verfahren hierzu sind dem Fachmann bekannt.

Das ausgetragene salzhaltige Polymer (sP) wird dann direkt in den Reaktor überführt. Während der Überführung weist das salzhaltige Polymer (sP) eine zweite Temperatur $T_{2-II}$, die oberhalb der Erweichungstemperatur $T_E$, bevorzugt oberhalb der Glasübergangstemperatur $T_G$, des Polyarylethers liegt, auf.

Gegenstand der vorliegenden Erfindung ist daher auch ein Verfahren, bei dem das salzhaltige Polymer in Schritt II) eine zweite Temperatur $T_{2-II,}$ die oberhalb der Glasübergangstemperatur $T_G$ liegt, aufweist.

Für die Erweichungstemperatur $T_E$ und die Glasübergangstemperatur $T_G$ des Polyarylethers gelten die zuvor beschriebenen Ausführungen und Bevorzugungen.

Bevorzugt liegt die zweite Temperatur $T_{2-II}$ im Bereich von 200 bis 400 °C, besonders bevorzugt im Bereich von 250 bis 350 °C.

Gegenstand der vorliegenden Erfindung ist daher auch ein Verfahren, bei dem die zweite Temperatur $T_{2-II}$ des salzhaltigen Polymers (sP) in Schritt II) im Bereich von 200 bis 400 °C liegt.

Es versteht sich von selbst, dass es möglich ist, dass das salzhaltige Polymer (sP), während es in Schritt II) von dem Mischkneter in den Reaktor überführt wird, zumindest teilweise abkühlt. In diesem Fall ändert sich die zweite Temperatur $T_{2-II}$ während des Überführens. Sie liegt aber während des gesamten Überführens oberhalb der Erweichungstemperatur $T_E$, bevorzugt oberhalb der Glasübergangstemperatur $T_G$ des Polyarylethers.

In einer weiteren Ausführungsform der vorliegenden Erfindung ist die zweite Temperatur $T_{2-II,}$ die das salzhaltige Polymer (sP) in Schritt II) aufweist, gleich der ersten Temperatur $T_{1-I}$, bei der die Komponenten (a1) und (a2) in Schritt I) umgesetzt werden.

Als Reaktor, in den das salzhaltige Polymer (sP) überführt wird, eignen sich alle dem Fachmann bekannten Reaktoren, die einen dynamischen Mischer umfassen. Bei dem Reaktor handelt es sich also vorzugsweise um einen Reaktor, der nach dem Rotor/Stator-Prinzip im Durchlaufprinzip arbeitet. Derartige Reaktoren sind dem Fachmann als solche bekannt.

Es besteht die Vorstellung, dass durch den dynamischen Mischer des Reaktors das in den Reaktor überführte salzhaltige Polymer (sP) zu feinen Tropfen verteilt wird. Dadurch wird die Oberfläche des salzhaltigen Polymers (sP) zusätzlich vergrößert, was die Extraktion des Salzes (S) in Schritt III) weiter verbessert. Die Größe der Tropfen des salzhaltigen Polymers (sP) liegt beispielsweise im Bereich von 10 bis 100 μm.

Es ist bevorzugt, dass der Reaktor, der den dynamischen Mischer umfasst, eine Scherrate im Bereich von 50 bis 2000 1/s, bevorzugt im Bereich von 100 bis 1500 1/s, besonders bevorzugt im Bereich von 200 bis 1000 1/s und am meisten bevorzugt von 300 bis 700 1/s aufweist.

Die Scherrate lässt sich über die Winkelgeschwindigkeit ω und die Umfangsgeschwindigkeit nach folgenden Formeln berechnen:

$$\omega = 2 \cdot \pi \cdot \frac{n}{60}$$

$$v = \omega \cdot r$$

$$\dot{\gamma} = \frac{v}{h}$$

wobei

- $\omega$ die Winkelgeschwindigkeit in Radius/Sekunde ist,
- n ist die Drehzahl in 1/min,
- v ist die Umfangsgeschwindigkeit in m/s,
- r ist der größte Radius des dynamischen Mischers, also des Rotors, in m,
- $\dot{\gamma}$ ist die Scherrate in 1/s und
- h ist der Scherspalt, wobei darunter der kleinste Spalt zwischen der Innenwand des Reaktors und dem dynamischen Mischer, also der kleinste Spalt zwischen dem Rotor und dem Stator verstanden wird, in m.

Erfindungsgemäß enthält der Reaktor ein Extraktionsmittel (E).

"Ein Extraktionsmittel (E)" bedeutet im Rahmen der vorliegenden Erfindung sowohl genau ein Extraktionsmittel als auch eine Mischung aus zwei oder mehreren Extraktionsmitteln (E). Als Extraktionsmittel (E) eignet sich prinzipiell jedes Lösungsmittel, das das Salz (S), das in dem salzhaltigen Polymer (sP) enthalten ist, löst. Bevorzugt enthält das Extraktionsmittel (E) ein protisches Lösungsmittel. Besonders bevorzugt enthält das Extraktionsmittel (E) Wasser.

Gegenstand der vorliegenden Erfindung ist daher auch ein Verfahren, bei dem als Extraktionsmittel (E) ein protisches Lösungsmittel verwendet wird.

Im Allgemeinen enthält das Extraktionsmittel (E) mindestens 50 Gew.-%, bevorzugt mindestens 70 Gew.-%, insbesondere bevorzugt mindestens 80 Gew.-% und am meisten bevorzugt mindestens 90 Gew.-% Wasser, jeweils bezogen auf das Gesamtgewicht des Extraktionsmittels (E). Am meisten bevorzugt besteht das Extraktionsmittel (E) aus Wasser.

Gegenstand der vorliegenden Erfindung ist daher auch ein Verfahren, bei dem das Extraktionsmittel (E) Wasser enthält.

Erfindungsgemäß weist das Extraktionsmittel (E) eine dritte Temperatur $T_{3\text{-}II}$ auf, die oberhalb der Erweichungstemperatur $T_E$, bevorzugt oberhalb der Glasübergangstemperatur $T_G$ des Polyarylethers liegt.

Gegenstand der vorliegenden Erfindung ist daher auch ein Verfahren, bei dem das Extraktionsmittel (E) in Schritt II) eine dritte Temperatur $T_{3\text{-}II}$, die oberhalb der Glasübergangstemperatur $T_G$ liegt, aufweist.

Vorzugsweise liegt die dritte Temperatur $T_{3\text{-}II}$ des Extraktionsmittels (E) im Bereich von 160 bis 300 °C, besonders bevorzugt im Bereich von 200 bis 280 °C und insbesondere bevorzugt im Bereich von 220 bis 260 °C.

Gegenstand der vorliegenden Erfindung ist daher auch ein Verfahren, bei dem die dritte Temperatur $T_{3\text{-}II}$ des Extraktionsmittels (E) in Schritt II) im Bereich von 160 bis 300 °C liegt.

Es versteht sich von selbst, dass die dritte Temperatur $T_{3\text{-}II}$ des Extraktionsmittels (E) unterhalb der Zersetzungstemperatur des Polyarylethers liegt. Beispielsweise liegt die dritte Temperatur $T_{3\text{-}II}$ mindestens 1 °C, bevorzugt mindestens 5°C und insbesondere bevorzugt mindestens 10 °C unterhalb der Zersetzungstemperatur des Polyarylethers.

Die dritte Temperatur $T_{3\text{-}II}$ kann oberhalb der zweiten Temperatur $T_{2\text{-}II}$ und/oder oberhalb der ersten Temperatur $T_{1\text{-}I}$ liegen. Ebenso ist es möglich, dass die dritte Temperatur $T_{3\text{-}II}$ unterhalb der zweiten Temperatur $T_{2\text{-}II}$ und/oder unterhalb der ersten Temperatur $T_{1\text{-}I}$ liegt. Diese Ausführungsform ist bevorzugt.

Der Druck im Reaktor in Schritt II) liegt beispielsweise im Bereich von 6 bis 100 bar, bevorzugt im Bereich von 10 bis 70 bar, insbesondere bevorzugt im Bereich von 20 bis 50 bar.

Schritt III)

In Schritt III) wird das Salz (S) aus dem salzhaltigen Polymer (sP) mit dem Extraktionsmittel (E) in dem Reaktor extrahiert. Die Extraktion wird bei einer vierten Temperatur $T_{4\text{-}III}$, die oberhalb der Erweichungstemperatur $T_E$ des Polyarylethers liegt, durchgeführt. Dabei wird ein entsalztes Polymer (eP) erhalten. Das entsalzte Polymer (eP) enthält den Polyarylether. Darüber hinaus wird ein salzhaltiges Extraktionsmittel (sE) erhalten, das das Extraktionsmittel (E) und das Salz (S) enthält.

Die Extraktion des Salzes (S) aus dem salzhaltigen Polymer (sP) in Schritt III) erfolgt bei einer vierten Temperatur $T_{4\text{-}III}$, die oberhalb der Erweichungstemperatur $T_E$, bevorzugt oberhalb der Glasübergangstemperatur $T_G$ des Polyarylethers liegt.

Gegenstand der vorliegenden Erfindung ist daher auch ein Verfahren, bei dem die Extraktion des Salzes (S) aus dem salzhaltigen Polymer (sP) bei einer vierten Temperatur $T_{4\text{-}III}$, die oberhalb der Glasübergangstemperatur $T_G$ des Polyarylethers liegt, erfolgt.

Vorzugsweise liegt die vierte Temperatur $T_{4\text{-}III}$ im Bereich von 160 bis 300 °C, besonders bevorzugt im Bereich von 200 bis 280 °C und insbesondere bevorzugt im Bereich von 220 bis 260 °C.

Gegenstand der vorliegenden Erfindung ist daher auch ein Verfahren, bei dem die vierte Temperatur $T_{4\text{-}III}$ in Schritt III) im Bereich von 160 bis 300 °C liegt.

Der Druck während der Extraktion des Salzes (S) in Schritt III) liegt beispielsweise im Bereich von 6 bis 100 bar, bevorzugt im Bereich von 10 bis 70 bar und insbesondere bevorzugt im Bereich von 20 bis 50 bar.

Die vierte Temperatur $T_{4-III}$ kann oberhalb der dritten Temperatur $T_{3-II}$ und/oder oberhalb der zweiten Temperatur $T_{2-II}$ und/oder oberhalb der ersten Temperatur $T_{1-I}$ liegen. Ebenso ist es möglich, dass die vierte Temperatur $T_{4-III}$ unterhalb der dritten Temperatur $T_{3-II}$ und/oder unterhalb der zweiten Temperatur $T_{2-II}$ und/oder unterhalb der ersten Temperatur $T_{1-I}$ liegt.

Gegenstand der vorliegenden Erfindung ist daher auch ein Verfahren, bei dem die erste Temperatur $T_{1-I}$. die zweite Temperatur $T_{2-II,}$ die dritte Temperatur $T_{3-II}$ und die vierte Temperatur $T_{4-III}$ oberhalb der Glasübergangstemperatur $T_G$ des Polyarylethers liegen.

Während der Extraktion des Salzes (S) liegt also das salzhaltige Polymer (sP) oberhalb der Erweichungstemperatur $T_E$, bevorzugt oberhalb der Glasübergangstemperatur $T_G$ des Polyarylethers vor. Daher liegt das salzhaltige Polymer (sP) auch während der Extraktion in Schritt III) geschmolzen vor.

Die Verweilzeit des salzhaltigen Polymers (sP) in dem Reaktor, der einen dynamischen Mischer umfasst, in Schritt III) kann beliebig sein. Beispielsweise liegt die Verweilzeit im Bereich von 1 bis 100 s (Sekunden), bevorzugt im Bereich von 3 bis 60 s und besonders bevorzugt im Bereich von 5 bis 20 s.

Unter der Verweilzeit wird im Rahmen der vorliegenden Erfindung der Zeitraum zwischen dem Zeitpunkt, zu dem das salzhaltige Polymer (sP) in den Reaktor eingebracht wird und dem Zeitpunkt, zu dem das erhaltene entsalzte Polymer (eP) aus dem Reaktor entnommen wird, verstanden.

In Schritt III) wird das salzhaltige Extraktionsmittel (sE) erhalten, das das Extraktionsmittel (E) und das Salz (S) enthält.

Das salzhaltige Extraktionsmittel (sE) enthält den Teil des Salzes (S), der aus dem salzhaltigen Polymer (sP) entfernt worden ist. Beispielsweise enthält das salzhaltige Extraktionsmittel (sE) 0,1 bis 20 Gew.-% des Salzes (S), bevorzugt 0,5 bis 10 Gew.-% des Salzes (S) und insbesondere bevorzugt 1 bis 5 Gew.-% des Salzes (S), jeweils bezogen auf das Gesamtgewicht des salzhaltigen Extraktionsmittels (sE).

Darüber hinaus wird das entsalzte Polymer (eP) erhalten. Das entsalzte Polymer (eP) kann von dem salzhaltigen Extraktionsmittel (sE) nach allen dem Fachmann bekannten Methoden abgetrennt werden. Bevorzugt wird das entsalzte Polymer (eP) durch Sedimentieren von dem salzhaltigen Extraktionsmittel (sE) abgetrennt. Die Sedimentation kann in dem gleichen Reaktor wie die Extraktion erfolgen, ebenso ist es möglich und erfindungsgemäß bevorzugt, die Sedimentation in einem Absetzbehälter durchzuführen. Dieses Prinzip der kombinierten Extraktion und anschließenden Sedimentation ist dem Fachmann auch als Mixer-Settler-Prinzip bekannt. Alternativ zur Sedimentation kann die Abtrennung im Zentrifugalfeld mittels Zentrifugen, Dekanter oder Hydrozyklonen erfolgen. Apparate hierzu sind dem Fachmann bekannt.

Die Schritte II und III) können wiederholt werden. In diesem Fall wird das entsalzte Polymer (eP) erneut mit dem Extraktionsmittel (E) in Kontakt gebracht und extrahiert. Dabei wird weiteres Salz (S) aus dem entsalzten Polymer (eP) entfernt.

Wird Schritt III) wiederholt, so wird er vorzugsweise als Kaskade wiederholt. Dies bedeutet, dass das entsalzte Polymer (eP) in einem Absetzbehälter von dem salzhaltigen Extraktionsmittel (sE) abgetrennt wird. Das entsalzte Polymer (eP) liegt in dem Absetzbehälter in geschmolzener Form vor und wird in dieser geschmolzenen Form in einen zweiten Reaktor überführt. In diesem zweiten Reaktor wird dann weiteres Salz (S) aus dem entsalzten Polymer (eP) durch Extraktion mit dem Extraktionsmittel (E) entfernt. Auf diesen zweiten Reaktor folgt bevorzugt ein zweiter Absetzbehälter, in dem das entsalzte Polymer (eP) von dem erhaltenen salzhaltigen Extraktionsmittel (sE) abgetrennt wird. Gegebenenfalls können auf den zweiten Absetzbehälter weitere Reaktoren und weitere Absetzbehälter folgen, in denen weiteres Salz (S) aus dem entsalzten Polymer (eP) entfernt wird.

Es versteht sich von selbst, dass das entsalzte Polymer (eP), das in Schritt III) erhalten wird, weniger Salz (S) enthält, als das in Schritt I) erhaltene salzhaltige Polymer (sP).

Im Allgemeinen enthält das entsalzte Polymer (eP) noch Spuren des Salzes (S). Unter "Spuren des Salzes (S)" wird vorliegend ein Salzgehalt im entsalzten Polymer (eP) von maximal 150 Gew.-ppm, bevorzugt von maximal 100 Gew.-ppm, insbesondere bevorzugt von maximal 80 Gew.-ppm und am meisten bevorzugt von maximal 50 Gew.-ppm des Salzes (S) verstanden, jeweils bezogen auf das Gesamtgewicht des entsalzten Polymers.

Im Allgemeinen enthält das entsalzte Polymer (eP) im Bereich von 0,01 bis 150 Gew.-ppm des Salzes (S), bevorzugt im Bereich von 0,1 bis 100 Gew.-ppm, besonders bevorzugt im Bereich von 1 bis 80 Gew.-ppm und insbesondere bevorzugt im Bereich von 5 bis 50 Gew.-ppm des Salzes (S), jeweils bezogen auf das Gesamtgewicht des entsalzten Polymers (eP).

Üblicherweise enthält das entsalzte Polymer (eP) daher maximal 150 Gew.-ppm, bevorzugt maximal 100 Gew.-ppm besonders bevorzugt maximal 80 Gew.-ppm und am meisten bevorzugt maximal 50 Gew.-ppm des Salzes (S), jeweils bezogen auf das Gesamtgewicht des entsalzten Polymers (eP).

Gegenstand der vorliegenden Erfindung ist daher auch ein Verfahren, bei dem das in Schritt III) erhaltene entsalzte Polymer (eP) maximal 150 Gew.-ppm des Salzes (S) enthält, bezogen auf das Gesamtgewicht des entsalzten Polymers (eP).

Die Untergrenze des Gehalts an Salz (S) im entsalzten Polymer (eP) liegt im Allgemeinen bei 0,01 Gew.-ppm,

bevorzugt bei 0,1 Gew.-ppm, besonders bevorzugt bei 1 Gew.-ppm und insbesondere bevorzugt bei 5 Gew.-ppm, bezogen auf das Gesamtgewicht des entsalzten Polymers (eP).

In einer insbesondere bevorzugten Ausführungsform der vorliegenden Erfindung ist das entsalzte Polymer (eP) im Wesentlichen frei von dem Salz (S). "Im Wesentlichen frei" bedeutet im Rahmen der vorliegenden Erfindung, dass das entsalzte Polymer (eP) maximal 15 Gew.-ppm, bevorzugt maximal 10 Gew.-ppm und insbesondere bevorzugt maximal 5 Gew.-ppm des Salzes (S) enthält, bezogen auf das Gesamtgewicht des entsalzten Polymers (eP).

Nach Schritt III) wird das entsalzte Polymer (eP) üblicherweise in geschmolzener Form enthalten. Das entsalzte Polymer (eP) wird dann vorzugsweise getrocknet und granuliert, beispielsweise mittels Stranggranulierung oder Unterwassergranulierung. Anschließend kann das entsalzte Polymer (eP) beispielsweise getrocknet werden. Zur Trocknung eignen sich prinzipiell alle dem Fachmann bekannten Methoden. Beispielsweise kann das entsalzte Polymer (eP) bei erhöhten Temperaturen getrocknet werden. Bevorzugt sind Temperaturen im Bereich von 150 bis 160 °C, besonders bevorzugt im Bereich von 100 bis 150 °C. Die Temperatur beim Trocknen liegt üblicherweise unterhalb der Glasübergangstemperatur $T_G$, bevorzugt unterhalb der Erweichungstemperatur $T_E$ des Polyarylethers. Die Trocknung kann gegebenenfalls unter vermindertem Druck durchgeführt werden.

Erfindungsgemäß bevorzugt wird das salzhaltige Polymer (sP) in einem Schmelzpolymerisationsverfahren hergestellt. Daher enthält das salzhaltige Polymer (sP) und damit auch das entsalzte Polymer (eP) bevorzugt kein aprotisch-polares Lösungsmittel, das ausgewählt ist aus der Gruppe bestehend aus N,N-Dimethylformamid, N,N-Dimethylacetamid, N-Methylpyrrolidon, N-Ethylpyrrolidon, Dimethylsulfoxid, Dimethylsulfon, Sulfolan, Diphenylsulfon und Mischungen daraus. Besonders bevorzugt enthält das entsalzte Polymer (eP) kein aprotisch-polares Lösungsmittel.

Gegenstand der vorliegenden Erfindung ist daher auch ein entsalztes Polymer (eP), erhältlich nach dem erfindungsgemäßen Verfahren, wobei das entsalzte Polymer (eP) 0 bis 100 Gew.-ppm, bevorzugt 0 bis 20 Gew.-ppm und insbesondere bevorzugt 0 bis 10 Gew.-ppm eines aprotisch-polaren Lösungsmittels ausgewählt aus der Gruppe bestehend aus N,N-Dimethylformamid, N,N-Dimethylacetamid, N-Methylpyrrolidion, N-Ethylpyrrolidon, Dimethylsulfoxid, Dimethylsulfon, Sulfolan, Diphenylsulfon und Mischungen daraus, am meisten bevorzugt kein aprotisch-polares Lösungsmittel enthält, und das weniger als 150 Gew.-ppm, bevorzugt weniger als 100 Gew.-ppm, mehr bevorzugt weniger als 80 Gew.-ppm und am meisten bevorzugt weniger als 50 Gew.-ppm des Salzes (S) enthält, wobei die Gew.-ppm jeweils bezogen sind auf das Gesamtgewicht des entsalzten Polymers (eP).

Gegenstand der vorliegenden Erfindung ist daher auch ein entsalztes Polymer (eP), erhältlich nach dem erfindungsgemäßen Verfahren.

Gegenstand der vorliegenden Erfindung ist weiterhin ein entsalztes Polymer (eP), erhältlich nach dem erfindungsgemäßen Verfahren, das 0 bis 100 Gew.-ppm eines aprotisch-polaren Lösungsmittels, ausgewählt aus der Gruppe bestehend aus N,N-Dimethylformamid, N,N-Dimethylacetamid, N-Methylpyrrolidion, N-Ethylpyrrolidon, Dimethylsulfoxid, Dimethylsulfon, Sulfolan, Diphenylsulfon und Mischungen daraus enthält und weniger als 150 Gew.-ppm des Salzes (S) enthält, wobei die Gew.-ppm jeweils bezogen sind auf das Gesamtgewicht des entsalzten Polymers (eP).

Die nach dem erfindungsgemäßen Verfahren erhältlichen entsalzten Polymere (eP) weisen vorzugsweise eine scheinbare Schmelzviskosität bei 350 °C/1150 $s^{-1}$ von 100 bis 1000 Pa s, bevorzugt von 150 bis 300 Pa s und insbesondere bevorzugt von 150 bis 275 Pa s auf.

Die Schmelzeviskosität wurde mittels eines Kapillarrheometers bestimmt. Dabei wurde die scheinbare Viskosität bei 350°C als Funktion der Scherrate in einem Kapillarviskosimeter (Göttfert Kapillarviskosimeter Rheograph 2003) mit einer Kreiskapillare der Länge 30 mm, einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt. Angegeben sind die bei 1150$s^{-1}$ bestimmten Werte.

Die Viskositätszahlen der nach dem erfindungsgemäßen Verfahren entsalzten Polymere (eP) liegen im Allgemeinen im Bereich von 20 bis 120 ml/g, bevorzugt von 30 bis 100 ml/g und insbesondere bevorzugt von 35 bis 95 ml/g, bestimmt durch Ubbelohde-Viskositätszahlmessung einer 0,01 g/ml Lösung des salzhaltigen Polymers (sP) in einer 1 : 1 Phenol/1,2-Dichlorbenzol-Mischung nach DIN 51562.

## Patentansprüche

**1.** Verfahren zur Herstellung eines Polyarylethers, der eine Erweichungstemperatur $T_E$ aufweist, umfassend die Schritte

I) Umsetzung der Komponenten

(a1) mindestens eine aromatische Dihydroxyverbindung und
(a2) mindestens eine aromatische Sulfonverbindung mit zwei Halogensubstituenten
in Gegenwart einer Carbonatverbindung (C) bei einer ersten Temperatur $T_{1-I}$, die oberhalb der Erweichungstemperatur $T_E$ des Polyarylethers liegt, in einem Mischkneter, unter Erhalt eines salzhaltigen Polymers (sP), das den Polyarylether und ein Salz (S) enthält,

II) Überführen des in Schritt I) erhaltenen salzhaltigen Polymers (sP) aus dem Mischkneter in einen Reaktor, der einen dynamischen Mischer umfasst, wobei das salzhaltige Polymer (sP) eine zweite Temperatur $T_{2-II}$, die oberhalb der Erweichungstemperatur $T_E$ des Polyarylethers liegt, aufweist, und wobei der Reaktor ein Extraktionsmittel (E) enthält, das eine dritte Temperatur $T_{3-II}$, die oberhalb der Erweichungstemperatur $T_E$ des Polyarylethers liegt, aufweist,
III) Extraktion des Salzes (S) aus dem salzhaltigen Polymer (sP) mit dem Extraktionsmittel (E) in dem Reaktor, der einen dynamischen Mischer umfasst, bei einer vierten Temperatur $T_{4-III}$, die oberhalb der Erweichungstemperatur $T_E$ des Polyarylethers liegt, unter Erhalt eines entsalzten Polymers (eP), das den Polyarylether enthält, und eines salzhaltigen Extraktionsmittels (sE), das das Extraktionsmittel (E) und das Salz (S) enthält.

2. Verfahren gemäß Anspruch 1, **dadurch gekennzeichnet, dass** die vierte Temperatur $T_{4-III}$ in Schritt III) im Bereich von 160 bis 300 °C liegt.

3. Verfahren gemäß Anspruch 1 oder 2, **dadurch gekennzeichnet, dass** die dritte Temperatur $T_{3-II}$ des Extraktionsmittels (E) in Schritt II) im Bereich von 160 bis 300 °C liegt.

4. Verfahren gemäß einem der Ansprüche 1 bis 3, **dadurch gekennzeichnet, dass** die zweite Temperatur $T_{2-II}$ des salzhaltigen Polymers (sP) in Schritt II) im Bereich von 200 bis 400 °C liegt.

5. Verfahren gemäß einem der Ansprüche 1 bis 4, **dadurch gekennzeichnet, dass** die erste Temperatur $T_{1-I}$ in Schritt I) im Bereich von 200 bis 400 °C liegt.

6. Verfahren gemäß einem der Ansprüche 1 bis 5, **dadurch gekennzeichnet, dass** die Erweichungstemperatur $T_E$ des Polyarylethers im Bereich von 150 bis 230 °C liegt.

7. Verfahren gemäß einem der Ansprüche 1 bis 6, **dadurch gekennzeichnet, dass** das Extraktionsmittel (E) Wasser enthält.

8. Verfahren gemäß einem der Ansprüche 1 bis 7, **dadurch gekennzeichnet, dass** das in Schritt III) erhaltene entsalzte Polymer (eP) maximal 150 Gew.-ppm des Salzes (S) enthält, bezogen auf das Gesamtgewicht des entsalzten Polymers (eP).

9. Verfahren gemäß einem der Ansprüche 1 bis 8, **dadurch gekennzeichnet, dass** der Polyarylether amorph ist.

10. Verfahren gemäß einem der Ansprüche 1 bis 9, **dadurch gekennzeichnet, dass** die Komponente (a1) ausgewählt ist aus der Gruppe bestehend aus 4,4'-Dihydroxybiphenyl, 2,2-Bis(4-hydroxyphenyl)propan und Bis(4-hydroxyphenyl)sulfon.

11. Verfahren gemäß einem der Ansprüche 1 bis 10, **dadurch gekennzeichnet, dass** die Komponente (a2) ausgewählt ist aus der Gruppe bestehend aus 4,4'-Dichlordiphenylsulfon, 4,4'-Difluordiphenylsulfon, 4,4'-Dibromdiphenylsulfon, 2,2'-Dichlordiphenylsulfon und 2,2'-Difluordiphenylsulfon.

12. Verfahren gemäß einem der Ansprüche 1 bis 11, **dadurch gekennzeichnet, dass** der Polyarylether ein Polyarylethersulfon ist.

13. Verfahren gemäß einem der Ansprüche 1 bis 12, **dadurch gekennzeichnet, dass** das Salz (S) Kaliumchlorid und/oder Natriumchlorid enthält.

14. Entsalztes Polymer (eP) erhältlich nach einem Verfahren gemäß einem der Ansprüche 1 bis 13.

15. Entsalztes Polymer (eP) gemäß Anspruch 14, **dadurch gekennzeichnet, dass** das entsalzte Polymer (eP) 0 bis 100 Gew.-ppm eines aprotisch-polaren Lösungsmittels ausgewählt aus der Gruppe bestehend aus N,N-Dimethylformamid, N,N-Dimethylacetamid, N-Methylpyrrolidon, N-Ethylpyrrolidon, Dimethylsulfoxid, Dimethylsulfon, Sulfolan, Diphenylsulfon und Mischungen daraus enthält, und weniger als 150 Gew.-ppm des Salzes (S) enthält, wobei die Gew.-ppm jeweils bezogen sind auf das Gesamtgewicht des entsalzten Polymers (eP).

Europäisches Patentamt
European Patent Office
Office européen des brevets

# EUROPÄISCHER RECHERCHENBERICHT

Nummer der Anmeldung
EP 16 16 1430

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2011/020823 A1 (BASF SE [DE]; WEBER MARTIN [DE]; MALETZKO CHRISTIAN [DE]; LANGE GERHAR) 24. Februar 2011 (2011-02-24) * Seite 1, Zeile 5 - Seite 13, Zeile 17; Ansprüche 1-21; Beispiele * | 1-15 | INV. C08G75/00 C08J3/00 C08J3/14 C08F6/28 C08G65/40 C08G65/46 C08G75/02 C08G75/20 C08G75/23 |
| X | GB 2 376 019 A (VICTREX MFG LTD [GB]) 4. Dezember 2002 (2002-12-04) * Seite 1, Zeile 3 - Seite 33, Zeile 21; Ansprüche 1-29; Beispiele * | 1-15 | |
| X | EP 2 305 740 A1 (EMS PATENT AG [CH]) 6. April 2011 (2011-04-06) * Absatz [0001] - Absatz [0034]; Ansprüche 1-13; Beispiele * | 1-15 | |
| X | US 4 113 698 A (STANILAND PHILIP ANTHONY) 12. September 1978 (1978-09-12) * Spalte 1, Zeile 4 - Spalte 4, Zeile 50; Ansprüche 1-11; Beispiele * | 1-15 | |
| | | | RECHERCHIERTE SACHGEBIETE (IPC) |
| | | | C08G C08J C08F |

Der vorliegende Recherchenbericht wurde für alle Patentansprüche erstellt

1

| Recherchenort | Abschlußdatum der Recherche | Prüfer |
|---|---|---|
| Den Haag | 7. Juli 2016 | Kiebooms, Rafaël |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 16 16 1430

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-07-2016

| Im Recherchenbericht angeführtes Patentdokument | Datum der Veröffentlichung | Mitglied(er) der Patentfamilie | Datum der Veröffentlichung |
|---|---|---|---|
| WO 2011020823 A1 | 24-02-2011 | BR 112012003468 A2 | 01-03-2016 |
| | | CN 102498158 A | 13-06-2012 |
| | | EP 2467415 A1 | 27-06-2012 |
| | | JP 5774003 B2 | 02-09-2015 |
| | | JP 2013502476 A | 24-01-2013 |
| | | KR 20120061896 A | 13-06-2012 |
| | | US 2012149796 A1 | 14-06-2012 |
| | | US 2015337085 A1 | 26-11-2015 |
| | | WO 2011020823 A1 | 24-02-2011 |
| GB 2376019 A | 04-12-2002 | AT 478107 T | 15-09-2010 |
| | | CA 2445684 A1 | 05-12-2002 |
| | | CN 1513013 A | 14-07-2004 |
| | | CN 1715308 A | 04-01-2006 |
| | | EP 1392753 A2 | 03-03-2004 |
| | | GB 2376019 A | 04-12-2002 |
| | | HK 1049492 A1 | 02-06-2006 |
| | | JP 2004526859 A | 02-09-2004 |
| | | KR 20040011515 A | 05-02-2004 |
| | | US 2005004340 A1 | 06-01-2005 |
| | | WO 02096974 A2 | 05-12-2002 |
| EP 2305740 A1 | 06-04-2011 | AT 512189 T | 15-06-2011 |
| | | EP 2305740 A1 | 06-04-2011 |
| US 4113698 A | 12-09-1978 | BE 851314 A1 | 10-08-1977 |
| | | DE 2705586 A1 | 11-08-1977 |
| | | FR 2340965 A1 | 09-09-1977 |
| | | GB 1563222 A | 19-03-1980 |
| | | IT 1075114 B | 22-04-1985 |
| | | JP S5296699 A | 13-08-1977 |
| | | JP S6035931 B2 | 17-08-1985 |
| | | NL 7701393 A | 12-08-1977 |
| | | US 4113698 A | 12-09-1978 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1957091
- EP 0000361 A
- DE 3644464
- EP 2305740 A
- EP 0292211 A
- US 4113698 A
- WO 2010046482 A
- DE 2749645
- WO 2014033321 A
- GB 2376019 A
- CN 102786681